# EUROPEAN PATENT SPECIFICATION

(11) **EP 1 176 590 B1**
(45) Date of publication and mention of the grant of the patent: **07.06.2006**
(21) Application number: 01114290.8
(22) Date of filing: 13.06.2001
(51) Int. Cl.: G11B 21/21, G11B 5/60

(54) **Head suspension for disk-based data storage apparatus**
Kopfaufhängungsvorrichtung für Gerät zur Datenaufzeichnung auf Platten
Dispositif de suspension de tête pour appareil d'emmagasinage de données sur disque

(30) Priority: 27.07.2000 EP 00810672
(43) Date of publication of application: 30.01.2002
(73) Proprietor: Hitachi Global Storage Technologies Netherlands B.V., 1076 AZ Amsterdam (NL)
(72) Inventor: Binnig, Gerd K., 8832 Wollerau (CH); Haeberle, Walter, 8820 Waedenswil (CH); Vettiger, Peter, 8135 Langnau am Albis (CH)
(74) Representative: Calderbank, Thomas Roger

(56) References cited:
- EP-A- 0 813 187
- US-A- 5 880 901
- US-A- 5 901 001
- US-A- 6 002 539
- US-A- 6 084 754

## Description

### Technical Field

The present invention generally relates to data storage apparatus and particularly relates to a head suspensions for disk-based data storage apparatus.

### Background of the Invention

Conventional disk-based data storage apparatus comprises a rotatable data storage disk and a head suspension supporting a read/write head for generally radial movement across the surface of the disk. In operation, the head "flies" over the rotating disk spaced from the surface of the disk by an air gap. The thickness of the gap is usually referred to as the "flying height" of the head. Continuing advances in digital data recording onto disk are achieving increasing data recording densities. However, increased data recording densities demand corresponding reductions in spacing between the head and disk. The reduced flying height of the head, in turn, demands increased stability in the head-disk spacing. It would be desirable therefore to provide a relatively fast and highly sensitive sensor system for measuring the spacing between disk and the head.

EP 0813187 discloses a magnetoresistive read/write head having an integral sensor for detecting temperature fluctuations caused by variations in the spacing between the sensor and disk for use in detecting shocks or vibrations experienced by the disk drive. US 6084754 discloses a method and apparatus for positioning a magnetoresistive head relative to a storage medium by monitoring the resistance of the magnetoresistive element in the head.

In accordance with the present invention, there is now provided a head suspension for maintaining a gap between a read-write head and a data Storage disk, the head suspension comprising: a heater for heating gas in the gap; and a sensor for generating an output indicative of the thickness of the gap, the sensor generating the output in dependence on thermal conductance across the gap, wherein the sensor is arranged so that in use it is located adjacent to the read-write head on the underside of the head suspension so as to face the disk.

Heat from the heater is transferred through the gap from the sensor to the disk by thermal conduction. The disk acts as a heat sink dissipating the heat transferred. If the thickness of the air gap decreases, conduction of heat from the sensor to the disk increases. The temperature of the heater therefore decreases. The temperature decrease at the heater, and therefore the corresponding decrease in gap thickness, is detected by the sensor. Conversely, if the thickness of the air gap increases, conduction of heat from the sensor to the disk decreases. The temperature of the heater therefore increases. The temperature increase at the heater, and therefore the corresponding increase in gap thickness, is detected by the sensor. The aforementioned temperature changes can be easily detected electrically, by monitoring, for example, current flow through a thermally-sensitive resistance. A similar technique is employed in the field of atomic force microscopy.

The present invention advantageously provides a relatively, lew cost, fast and highly sensitive sensor system for measuring the spacing between the disk and the head in a disk storage apparatus.

In the interests of simplicity, the heater is preferably integral to the sensor. In preferred embodiments of the present invention to be described shortly, the sensor comprises a bar of silicon. The heater may then conveniently comprise a narrowed portion of the bar. The narrowed portion may, in turn, comprise a doped region thereby enhancing the sensitivity of the sensor. In particularly preferred embodiments of the present invention, the head suspension comprises an elongate body having a first silicon layer, a silicon oxide layer disposed on the first silicon layer and a second silicon layer disposed on the silicon oxide layer, wherein the bar is located in the second silicon layer. Preferably, one end of the bar terminates in the second silicon layer and the other end of the bar terminates in an electrical contact isolated from second silicon layer. An aperture may be disposed between the narrowed portion and the silicon oxide layer to improve thermal isolation of the narrowed region. The head suspension may include an integral read-write head.

The present invention extends to control apparatus for controlling the thickness of a gap between a read-write head and a data storage disk, the control apparatus comprising: a head suspension as hereinbefore described; a comparator for generating an error signal indicative of any difference between the output from the sensor and a desired gap thickness; and an actuator for moving the head suspension relative to the disk to vary the thickness of the gap in dependence on the error signal.

The present invention also extends to disk storage apparatus comprising: a data storage disk; a read-write head; and control apparatus as hereinbefore described, for controlling the thickness of a gap between the head and the disk.

Viewing the present invention from another aspect, there is now provided a method for maintaining a gap between a read-write head and a data storage disk, the method comprising: supporting the read-write head via a head suspension; heating gas in the gap via a heater provided on the head suspension; and, generating an output indicative of the thickness of the gap via a sensor in dependence on thermal conductance across the gap, wherein the sensor is located adjacent to the read-write head on the underside of the head suspension facing the disk.

Preferably, the method includes controlling the thickness of the gap between the read-write head and data storage disk by generating an error signal indicative of any difference between the output from the sensor and a desired gap thickness; and, moving the head suspension relative to the disk to vary the thickness of the gap in dependence on the error signal.

### Brief Description of the Drawings

Preferred embodiments of the present invention will now be described, by way of example only, with reference to the accompanying drawings, in which:
Figure 1 is a plan view of a disk-based data storage apparatus;
Figure 2 is a bottom plan view of part of a head suspension of the storage apparatus;
Figure 3 is a cross section of the head along the line A-A' in Figure 2;
Figure 4 is a bottom plan view of a sensor of the head suspension;
Figure 5 is a cross section of the head along the line B-B' in Figure 4;
Figure 6 is an isometric view of a sensor embodying the present invention;
Figure 7 is an isometric view of another sensor embodying the present invention;
Figure 8 is a control system of the storage apparatus.

### Detailed Description of a Preferred Embodiment

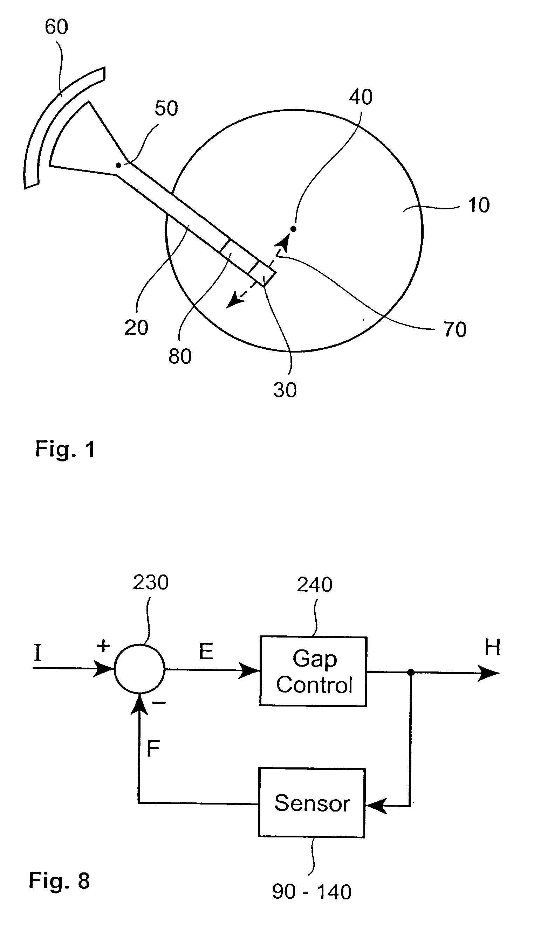

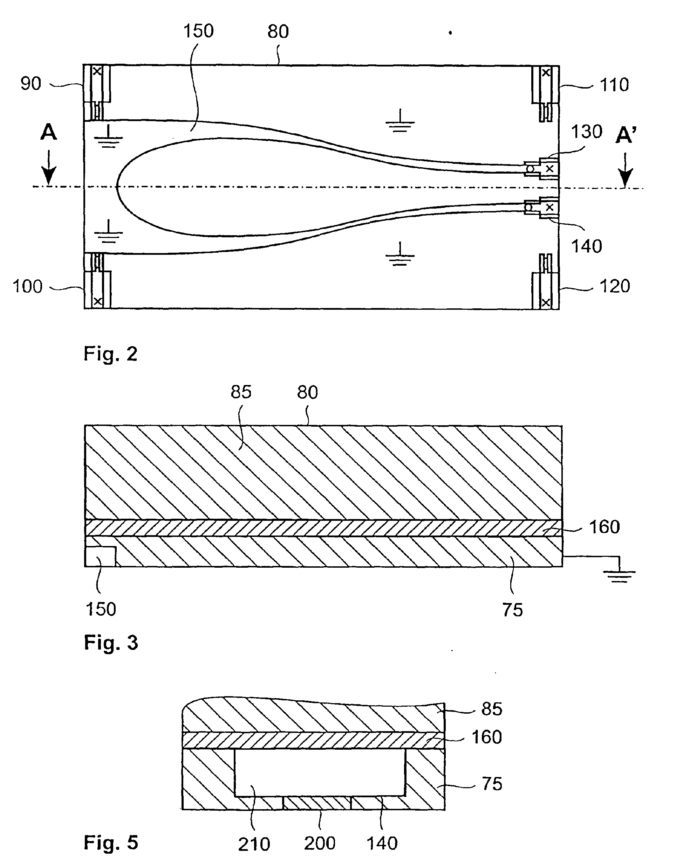

Referring first to Figure 1, an example of data storage apparatus embodying the present invention comprises a data storage disk 10 mounted for rotation on a central spindle 40 and a read/write transducer head 30 mounted on an elongate head suspension 20. Depending on the data storage medium employed in the disk 10, the head 30 may be a magnetic head, magneto-resistive head, magneto-optic head, optical head, or the other type of head. In some embodiments of the present invention, the head 30 may be integral to the head suspension 20. The head suspension 20 is pivotally mounted at a pivot point 50 remote from the disk 10. A coil 60 is disposed adjacent the end of the head suspension 20 remote from the head 30. In operation, the coil 60 permits controllable deflection of the head suspension 20 about the pivot point 50 and thus controllable movement of the head along a generally radial path 70 across the surface of the disk 10. In operation, the head 30 "flies" over the rotating disk 10 spaced from the surface of the disk 10 by an air gap spacing or "flying height". The head 30 can be simultaneously moved radially across the surface of the rotating disk 10 via the head suspension 20. The head suspension 20 thus allows the head 30 to address substantially any point on the surface of the disk 30. A region of the head suspension 20 adjacent the head 30 will now be described with reference to Figure 2.

Referring to Figure 2, the region of the head suspension adjacent the head 30 comprises an elongate body 80 having a substantially U-shaped recess 150 formed therein. Sensors 90 and 100 are located at the end of the body 80 adjacent the head 30. Also, sensors 110 and 120 are located at the end of the body the remote from head 30. Additionally, sensors 130 and 140 are located in the ends of the recess 150. In the assembled data storage apparatus, the sensors 90 to 140 each face the surface of the disk 10. In use, air flows through the recess 150 between the body 80 and the spinning disk 10. The air flow provides an air bearing on which the head 30 flies over the rotating disk 10. Sensors 90 and 100 generate signals indicative of the thickness of the gap between the disk 10 and the head 30. Sensors 110 and 120 detect temperature variations in the environment of head suspension 20. Sensors 130 and 140 detect variations in the air flow through the recess 150. In some embodiments of the present invention, sensor 130 may be combined with sensor 110. Likewise, sensor 140 may be combined with sensor 120.

With reference to Figure 3, the body 80 comprises a silicon bulk layer 85 of a thickness in the range 1 to 5 micro-metres. An electrically insulating layer 160 of silicon oxide of a thickness in the range 0.2 to 0.5 micro-metres is disposed on the bulk layer 85. A grounded silicon layer 75 of a thickness of approximately 1 micro-metre, in which the recess 150 is formed, is disposed on the insulting layer 75.

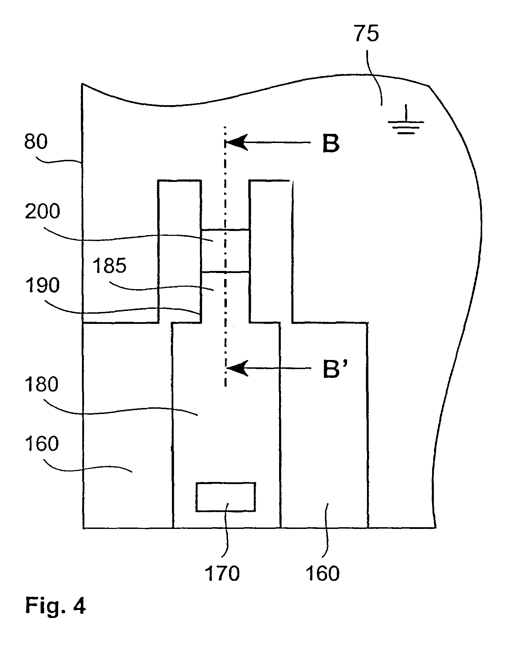

Turning now to Figure 4, each of the sensors 90 to 140 comprises a bar 180 of silicon. The bar 180 may be formed by removing the surrounding silicon layer 75 down to the silicon oxide layer 160, by chemical etching for example. One end of the bar 180 is connected to the grounded silicon layer 75. An electrical contact 170 is disposed at the other end of the bar 180. Each sensor 90 to 140 also includes an integral heater 190. The heater 190 comprises a narrowed region 185 of the bar 180. The narrowed region 185 has a width between 500 and 600 nano-metres. The electrical contact 170 is connected to a constant power source (not shown).

The operation of the sensor 90 to 140 will now be described. It will be appreciated that sensors 100 to 140 operate in a similar manner. In operation, current flows from the power source through the bar 180 to ground. The narrowed region 185 presents an increased resistance to current flow through the bar 180. The current flow through the bar 180 thus causes heating of the narrowed region 185. Heat from the narrowed region 185 is transferred through the gap from the sensor 90 to the rotating disk 10 by thermal conduction. The disk 10 acts as a heat sink dissipating the heat transferred. If the thickness of the air gap decreases, conduction of heat from the sensor 90 to the disk 10 increases. The temperature of the narrowed region 185 therefore decreases. Thus, the resistance of the narrowed region 185 also decreases. Power remains constant. Therefore, the current flow through the bar 180 increases. Conversely, if the thickness of the air gap increases, conduction of heat from the sensor 90 to the disk 10 decreases. The temperature of the narrowed region 185 therefore increases. Thus, the resistance of the narrowed region 185 increases. Therefore, the current flow through the bar 180 decreases. In some embodiments of the present invention, an additional sensor may be provided on the surface of the head suspension 20 remote from the disk 10 for generating an output signal indicative of ambient temperature against which the outputs from the sensors 90 to 140 may be compared.

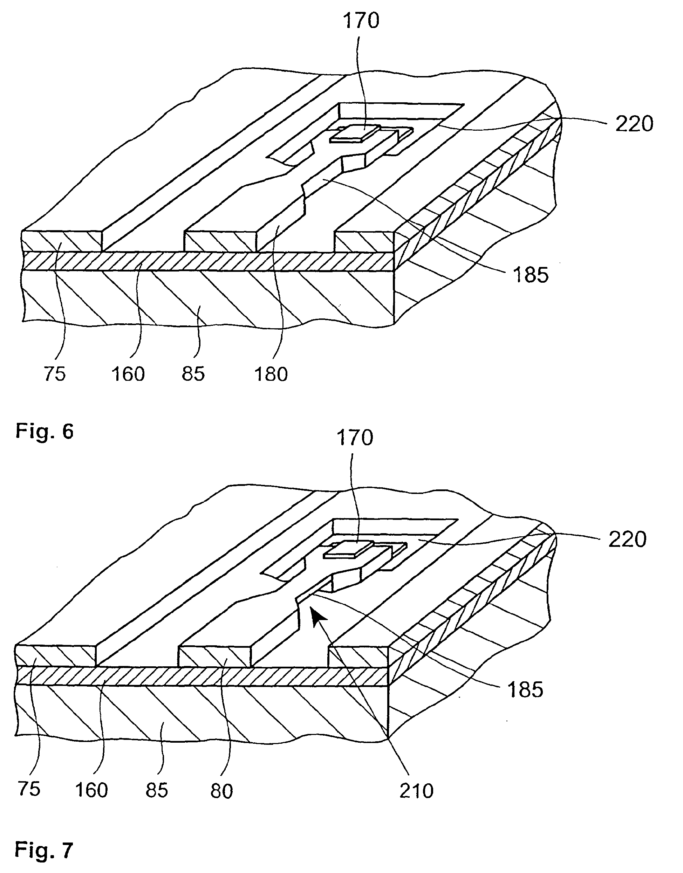

The aforementioned changes in current flow through the bar 180 can be easily detected to provide an indication of changes in the thickness of the air gap between the sensor 90 and the disk 10. In particularly preferred embodiments of the present invention, the sensitivity of the sensor 90 is enhanced by doping at least a portion 200 of the narrowed region 185. The portion 200 may be doped with a positive dopant such as boron or a negative dopant such as arsenic. With reference to Figure 5, in especially preferred embodiments of the present invention, the sensitivity of the sensor 90 is further enhanced by providing an aperture 210 of between 400 and 600 nano-metres between the narrowed region 185 and the insulating layer 160, thereby thermally isolating the narrowed region 185 from the insulating layer 160.

Referring to Figure 6, in an especially preferred embodiment of the present invention, a via 220 is formed in the insulating layer 160 and to the bulk layer 85. The electrical contact 170 extends through the via 220 to the side of the body remote from the sensor 90. This arrangement permits convenient connection of the sensor 90 to the constant power source and other associated circuitry. Figure 7, which is a similar view to that of Figure 6, illustrates an embodiment of the present invention in which the aperture 210 is provided between the narrowed region 185 and the insulating layer 160.

Referring now to Figure 8, preferred embodiments of the present invention comprise a gap control 240 for moving the head suspension 20 in a direction parallel to its axis of pivot to adjust the thickness H of the gap between the head 30 and the disk 10. In preferred embodiments of the present invention, the gap control 240 comprises the piezoelectric transducer for adjusting the thickness of the gap. The gap control 240 adjusts the thickness of the gap in response to an error signal E. The error signal E is generated by a comparator in dependence on any difference between an input signal I indicative of a desired gap thickness and a feedback signal F indicative of the actual gap thickness H. The feedback signal F is generated in dependence on the outputs of the sensors 90 to 140. The sensors 90 to 140 therefore complete a negative feedback loop between the desired gap thickness I and the actual gap thickness H. The feedback loop operates to minimise the error signal E, thereby maintaining the actual gap thickness H at the desired gap thickness I. It will be apparent that the outputs from the sensor 90 to 140 may be combined in many different ways to produce the feedback signal F. Alternatively, in some embodiments of the present invention, each of sensors 90 to 140 may participate in a different one of multiple feedback control systems each controlling a different aspect of the flight path of the head 30 with the common objective of maintaining the head 30 on a level flight path relative to the surface of the disk 10. Examples of such aspects may for example include pitch and yaw of the head 30 relative to the surface of the disk 10

The dimensions and ranges hereinbefore specified are provided by way of example only in the interest of demonstrating the relative sizes of features found in preferred embodiments of the present invention. It will be appreciated however that the dimensions and relative sizes of features found in other embodiments of the present invention may differ from those specified herein.

In the preferred embodiments hereinbefore described, the gap between the head 30 and the disk 10 is filled with air. However, it will be appreciated, that in other embodiments of the present invention, the gap may be filled with other gaseous matter. Also, in the embodiments of the present invention hereinbefore described, each of sensors 90 to 140 comprises an integral heater 190. However, it will be recognised that in other embodiments of the present invention, the head suspension 20 may comprise discrete heaters and sensors. Furthermore, in the embodiments of the present invention hereinbefore described, the head suspension 20 comprises six heaters and six corresponding sensors. However, it will be appreciated that, in other embodiments of the present invention, the head suspension may comprise more or fewer heaters and sensors. In particular, it will be appreciated that, in some embodiments of the present invention, a single heater and an accompanying sensor may suffice.

## Claims

1. A head suspension (20) for maintaining a gap between a read-write head (30) and a data storage disk (10), the head suspension (20) comprising: a heater (190) for heating gas in the gap; and a sensor (90-140) for generating an output indicative of the thickness of the gap, the sensor (90-140) generating the output in dependence on thermal conductance across the gap,
**characterised in that** the sensor (90-140) is arranged so that in use it is located adjacent to the read-write head (30) on the underside of the head suspension (20) so as to face the disk (10).

2. A head suspension (20) as claimed in claim 1, wherein the heater (190) is integral to the sensor (90-140).

3. A head suspension (20) as claimed in claim 2, wherein the sensor (90-140) comprises a bar (180) of silicon.

4. A head suspension (20) as claimed in claim 3, wherein the heater (190) comprises a narrowed portion (185) of the bar (180).

5. A head suspension (20) as claimed in claim 4, wherein the narrowed portion (185) comprises a doped region (200).

6. A head suspension (20) as claimed in claim 4 or claim 5, comprising an elongate body (80) having a first silicon layer (85), a silicon oxide layer (160) disposed on the first silicon layer (85) and a second silicon layer (75) disposed on the silicon oxide layer (160), wherein the bar (180) is located in the second silicon layer (75).

7. A head suspension (20) as claimed in claim 6, wherein one end of the bar (180) terminates in the second silicon layer (75) and the other end of the bar (180) terminates in an electrical contact (170) isolated from second silicon layer (75).

8. A head suspension (20) as claimed in claim 7, comprising an aperture (210) between the narrowed portion (185) and the silicon oxide layer (160).

9. A head suspension (20) as claimed in any preceding claim, comprising an integral read-write head (30).

10. Control apparatus for controlling the thickness of a gap between a read-write head (30) and a data storage disk (10), the control apparatus comprising: a head suspension (20) as claimed in any preceding claim; a comparator (230) for generating an error signal indicative of any difference between the output from the sensor (90-140) and a desired gap thickness; and an actuator (240) for moving the head suspension (20) relative to the disk (10) to vary the thickness of the gap in dependence on the error signal.

11. Disk storage apparatus comprising: a data storage disk (10); a read-write head (30); and a control apparatus as claimed in claim 10, for controlling the thickness of a gap between the head (30) and the disk (10).

12. A method for maintaining a gap between a read-write head (30) and a data storage disk (10), the method comprising: supporting the read-write head (30) via a head suspension (20); heating gas in the gap via a heater (190) provided on the head suspension (30); and, generating an output indicative of the thickness of the gap via a sensor (90-140) in dependence on thermal conductance across the gap, **characterised in that** the sensor (90-140) is located adjacent to the read-write head (30) on the underside of the head suspension (20) facing the disk (10).

13. A method according to claim 12, including controlling the thickness of the gap between the rcad-write head (30) and data storage disk (10) by generating an error signal indicative of any difference between the output from the sensor (90-140) and a desired gap thickness; and, moving the head suspension (20) relative to the disk (10) to vary the thickness of the gap in dependence on the error signal.

## Patentansprüche

1. Kopfaufhängung (20) zur Aufrechterhaltung eines Spalts zwischen einem Lese-/Schreibkopf (30) und einer Datenspeicherplatte (10), wobei die Kopfaufhängung (20) Folgendes umfasst: eine Heizvorrichtung (190) zum Erwärmen von Gas im Spalt und einen Sensor (90-140) zur Erzeugung eines Ausgangssignals, das die Dicke des Spalts angibt, wobei der Sensor (90-140) das Ausgangssignal in Abhängigkeit der Wärmeleitfähigkeit entlang des Spalts erzeugt,
**dadurch gekennzeichnet, dass** der Sensor (90-140) so bereitgestellt ist, dass er bei der Verwendung benachbart zum Lese-/Schreibkopf (30) an der Unterseite der Kopfaufhängung (20) angeordnet ist, um der Platte (10) gegenüberzuliegen.

2. Kopfaufhängung (20) nach Anspruch 1, worin die Heizvorrichtung (190) im Sensor (90-140) integriert ist.

3. Kopfaufhängung (20) nach Anspruch 2, worin der Sensor (90-140) einen Stab (180) aus Silicium umfasst.

4. Kopfaufhängung (20) nach Anspruch 3, worin die Heizvorrichtung (190) einen verschmälerten Abschnitt (185) des Stabs (180) umfasst.

5. Kopfaufhängung (20) nach Anspruch4, worin der verschmälerte Abschnitt (185) einen dotierten Bereich (200) umfasst.

6. Kopfaufhängung (20) nach Anspruch 4 oder 5, umfassend einen länglichen Körper (80) mit einer ersten Siliciumschicht (85), einer auf der ersten Siliciumschicht (85) bereitgestellte Siliciumoxidschicht (160) und eine auf der Siliciumoxidschicht (160) bereitgestellte zweite Siliciumschicht (75), worin der Stab (180) in der zweiten Siliciumschicht (75) angeordnet ist.

7. Kopfaufhängung (20) nach Anspruch 6, worin ein Ende des Stabs (180) in der zweiten Siliciumschicht (75) endet und das andere Ende des Stabs (180) in einem elektrischen Kontakt (170) endet, der von der zweiten Siliciumschicht (75) isoliert ist.

8. Kopfaufhängung (20) nach Anspruch 7, umfassend eine Öffnung (210) zwischen dem verschmälerten Abschnitt (185) und der Siliciumoxidschicht (160).

9. Kopfaufhängung (20) nach einem der vorangegangenen Ansprüche, umfassend einen integrierten Lese-/Schreibkopf (30).

10. Steuervorrichtung zur Steuerung der Dicke eines Spalts zwischen einem Lese-/Schreibkopf (30) und einer Datenspeicherplatte (10), wobei die Steuervorrichtung Folgendes umfasst: eine Kopfaufhängung (20) nach einem der vorangegangenen Ansprüche, einen Vergleicher (230) zur Erzeugung eines Fehlersignals, das jedweden Unterschied zwischen dem Ausgangssignal des Sensors (90-140) und einer gewünschten Spaltdicke angibt, und einen Aktuator (240) zur Bewegung der Kopfaufhängung (20) in Bezug auf die Platte (10), um die Dicke des Spalts in Abhängigkeit vom Fehlersignal zu variieren.

11. Datenspeichervorrichtung, umfassend: eine Datenspeicherplatte (10), einen Lese-/Schreibkopf (30) und eine Steuervorrichtung nach Anspruch 10 zur Steuerung der Dicke eines Spalts zwischen dem Kopf (30) und der Platte (10).

12. Verfahren zur Aufrechterhaltung eines Spalts zwischen einem Lese-/Schreibkopf (30) und einer Datenspeicherplatte (10), wobei das Verfahren Folgendes umfasst: das Lagern des Lese-/Schreibkopfs (30) durch eine Kopfaufhängung (20), das Erwärmen von Gas im Spalt mithilfe einer Heizvorrichtung (190), und die Erzeugung eines Ausgangssignals, das die Dicke des Spalts angibt, durch einen Sensor (90-140) in Abhängigkeit der Wärmeleitfähigkeit entlang des Spalts, **dadurch gekennzeichnet, dass** der Sensor (90-140) benachbart zum Lese-/Schreibkopf (30) an der Unterseite der Kopfaufhängung (20) angeordnet ist, um der Platte (10) gegenüberzuliegen.

13. Verfahren nach Anspruch 12, umfassend die Steuerung der Dicke des Spalts zwischen dem Lese-/Schreibkopf (30) und der Datenspeicherplatte (10) durch die Erzeugung eines Fehlersignals, das jedweden Unterschied zwischen dem Ausgangssignal des Sensors (90-140) und einer gewünschten Spaltdicke angibt, und die Bewegung der Kopfaufhängung (20) in Bezug auf die Platte (10), um die Dicke des Spalts in Abhängigkeit vom Fehlersignal zu varüeren.

## Revendications

1. Dispositif de suspension de tête (20) pour maintenir un espace entre une tête de lecture-écriture (30) et un disque de stockage de données (10), le dispositif de suspension de tête (20) comprenant: un organe de chauffage (190) pour chauffer le gaz dans l'espace; et un capteur (90-140) pour produire une sortie indiquant l'épaisseur de l'espace, le capteur (90-140) produisant la sortie en fonction de la conductance thermique à travers l'espace,
**caractérisé en ce que** le capteur (90-140) est agencé pour que, en utilisation, il se situe d'une manière adjacente à la tête de lecture-écriture (30) sur le côté inférieur du dispositif de suspension de tête (20) de manière à être orienté vers le disque (10).

2. Dispositif de suspension de tête (20) selon la revendication 1, où l'organe de chauffage (190) est intégral avec le capteur (90-140).

3. Dispositif de suspension de tête (20) selon la revendication 2, où le capteur (90-140) comprend une barre (180) en silicium.

4. Dispositif de suspension d e tête (20) selon la revendication 3, où l'organe de chauffage (190) comprend une portion rétrécie (185) de la barre (180).

5. Dispositif de suspension de tête (20) selon la revendication 4, où la portion rétrécie (185) comprend une région dopée (200).

6. Dispositif de suspension de tête (20) selon la revendication 4 ou la revendication 5, comprenant un corps oblong (80) ayant une première couche de silicium (85), une couche d'oxyde de silicium (160) disposée sur la première couche de silicium (85) et une deuxième couche de silicium (75) disposée sur la couche d'oxyde de silicium (160), où la barre (180) se situe dans la deuxième couche de silicium (75).

7. Dispositif de suspension de tête (20) selon la revendication 6, où une extrémité de la barre (180) se termine dans la deuxième couche de silicium (75), et l'autre extrémité de la barre (180) se termine dans un contact électrique (170) isolé de la deuxième couche de silicium (75).

8. Dispositif de suspension de tête (20) selon la revendication 7, comprenant une ouverture (210) entre la portion rétrécie (185) et la couche d'oxyde de silicium (160).

9. Dispositif de suspension de tête (20) selon l'une des revendications précédentes, comprenant une tête de lecture-écriture intégrale (30).

10. Appareil de commande pour commander l'épaisseur d'un espace entre une tête de lecture-écriture (30) et un disque de stockage de données (10), l'appareil de commande comprenant: un dispositif de suspension de tête (20) tel que revendiqué dans l'une quelconque des revendications précédentes; un comparateur (230) pour produire un signal d'erreur indiquant une différence entre la sortie du capteur (90-140) et une épaisseur d'espace souhaitée; et un actionneur (240) pour déplacer le dispositif de suspension de tête (20) par rapport au disque (10) afin de faire varier l'épaisseur de l'espace en fonction du signal d'erreur.

11. Appareil de mémorisation sur disque comprenant: un disque de mémorisation de données (10); une tête de lecture-écriture (30); et un appareil de comman de tel que revendiqué dans la revendication 10, pour régler l'épaisseur d'un espace entre la tête (30) et le disque (10).

12. Procédé pour maintenir un espace entre une tête de lecture-écriture (30) et un disque de mémorisation de données (10), le procédé comprenant: le support de la tête de lecture-écriture (30) par un dispositif de suspension de tête (20); le chauffage du gaz dans l'espace par un organe de chauffage (190) prévu sur le dispositif de suspension de tête (30); et la génération d'une sortie indiquant l'épaisseur de l'espace par un capteur (90-140) en fonction de la conductance thermique à l'espace, **caractérisé en ce que** le capteur (90-140) se situe d'une manière adjacente à la tête de lecture-écriture (30) au côté inférieur du dispositif de su spension de tête (20) orienté vers le disque (10).

13. Procédé selon la revendication 12, incluant le réglage de l'épaisseur de l'espace entre la tête de lecture-écriture (30) et le disque de mémorisation de données (10) en produisant un signal d'erreur indiquant toute différence entre la sortie du capteur (90-140) et une épaisseur d'espace souhaitée; et le déplacement du dispositif de suspension de tête (20) par rapport au disque (10) pour faire varier l'épaisseur de l'espace en fonction du signal d'erreur.
